**Europäisches Patentamt**

**European Patent Office**

**Office européen des brevets**

(11) Veröffentlichungsnummer: **0 238 435**
**A1**

## (12) EUROPÄISCHE PATENTANMELDUNG

(21) Anmeldenummer: **87710002.4**

(22) Anmeldetag: **12.03.87**

(51) Int. Cl.³: **A 01 K 27/00**
**A 41 D 27/08**

(30) Priorität: **12.03.86 DE 8606760 U**
**19.09.86 DE 3631820**

(43) Veröffentlichungstag der Anmeldung:
**23.09.87 Patentblatt 87/39**

(84) Benannte Vertragsstaaten:
**AT BE CH DE FR GB IT LI LU NL SE**

(71) Anmelder: **Schröpfer, Thomas**
**Frankenstrasse 202**
**D-8700 Würzburg(DE)**

(72) Erfinder: **Schröpfer, Thomas**
**Frankenstrasse 202**
**D-8700 Würzburg(DE)**

(74) Vertreter: **Pöhner, Wilfried Anton, Dr.**
**Kaiserstrasse 27 Postfach 63 23**
**D-8700 Würzburg 1(DE)**

(54) **Band zur Sichtbarmachung bei Dunkelheit.**

(57) Zum Erkennen bei Dunkelheit wird zur Sichtbarmachung von Mensch oder Tier, insbesondere Hunde, ein Band (1) vorgeschlagen, welches außenseitig lumineszierende Eigenschaften aufweist und im speziellen mit in PVC (Polyvinylchlorid) eingebetteten Leuchtkristallen (4) ausgerüstet ist.

0238435

Band zur Sichtbarmachung bei Dunkelheit

-----------------------------------------------

Die Erfindung betrifft ein Band zur Sichtbarmachung bei Dunkelheit.

Aus Sicherheitsgründen ist allgemein geläufig, Personen mit Armbinden und Tiere, hier insbesondere Hunde, mit Halsbändern auszurüsten, die reflektierende Eigenschaften aufweisen. Hierdurch wird sichergestellt, daß auftreffendes Licht, welches beispielsweise von einem Fahrzeug herrühren kann, in hohem Maße reflektiert und hierdurch den Standort von Person oder Tier erkennbar wird, so daß sich der Verkehrsteilnehmer hierauf einstellen und entsprechende Ausweichmanöver einleiten kann. Als prinzipieller Nachteil ist anzusehen, daß zur Aktivierung der Reflektoren auftreffendes Licht erforderlich ist, so daß ein nicht angestrahltes Objekt auch nicht bemerkt werden kann.

Hiervon ausgehend macht sich die Erfindung die Schaffung eines Bandes zur Aufgabe, mit dessen Hilfe Mensch oder Tiere bei Dunkelheit ohne angestrahlt zu werden sicht- und erkennbar ist.

Gelöst wird diese Aufgabe erfindungsgemäß dadurch, daß die Außenseite des Bandes mit lumineszierenden Eigenschaften versehen ist.

Hierbei ist der Begriff "Band" sehr weit auszulegen, denn er umfaßt alle aus beliebigen Fasern hergestellten Bänder, die durch Weben, Wirken oder Stricken hergestellt sind und mechanisch, durch Verkleben, Anlöten oder Verschweißen befestigt werden.

Des weiteren kann das Band aus einer Folie vom Material Polyethylen, Polypropylen, Polyester, Polyamid oder Polyvinylchlorid aufgebaut sein. Sowohl Dicke als auch Breite des Bandes kann in weiten Bereichen variiert werden. Zur Verstärkung können Schnüre oder ein Verstärkungsband mit hoher Festigkeit ins Innere eingebracht werden. Aus dem gleichen Grund kann darüber hinaus ein Draht oder ein Metallgitter zur Verstärkung eingepreßt sein. Weiter umfaßt der Begriff "Band" auch all jene Ausführungsformen, die auf ein bereits existierendes Band aufgeklebt oder auf andere Arten befestigt sind oder unabhängig davon festgelegt werden. Dann erübrigt sich, die Festigkeit so auszulegen, daß die ausgeübten Kräfte übertragen werden können.

In Anlehnung an die übliche Terminologie werden durch den Begriff "Lumineszenz" alle Fälle von Lichtemission definiert, die ihre Ursache nicht bzw. nicht allein in der Temperatur des Stoffes haben. Ursache der Lumineszenz ist vielmehr irgendeine Art von "Anregung". Daraus ergibt sich, daß sie bei konstanter Temperatur nach Abschalten der Anregung aufhören muß, wobei allerdings Abklingzeiten beliebiger Dauer (bis zu Monaten) beobachtet werden können, da die Anregungsenergie solange gespeichert bleibt. Stets ist der gespeicherte Energieinhalt jedoch endlich und von der Art der Anregung abhängig.

Als Untermenge der Lumineszenz werden diejenigen Erscheinungen, die sich durch ein längeres Nachleuchten nach Abschalten der Erregung auszeichnen, durch den Begriff Phosphoreszenz bezeichnet, die für die Erfindung besonders empfehlenswert sind. An sich sind solche phosphoreszierende Verbindungen bekannt und es handelt sich beispielsweise um organische Stoffe wie Benzolderivate oder um Salze von Seltenenerdmetallen wie z.B. Lanthansalzen. Die lumineszierenden bzw. phosphoreszierenden Eigenschaften werden durch Aufbringen entsprechender Stoffe in oder auf die Außenseite des Bandes erzeugt.

Die mit der Erfindung erreichbaren Vorteile bestehen darin, daß die mit dem Band ausgerüstete Person oder das Tier in der Dämmerung und bei Dunkelheit auch dann gesehen und erfaßt werden kann, wenn es nicht durch eine Lichtquelle angestrahlt wird. Hierdurch wird möglich, daß die anderen Verkehrsteilnehmern die jeweilige Person oder das Tier auch dann bereits sehen, wenn sie noch nicht in den Lichtkegel des Fahrzeuges oder in den Bereich einer anderen Lichquelle geraten ist. Gleichzeitig ist dem Tierhalter das Beobachten und Kontrollieren seines Tieres auch bei nächtlichen Spaziergängen möglich. Die Leuchtenergie der lumineszierenden Stoffe speist sich aus Energieaufnahmen während der Zeiten, in denen das Band in beleuchteten Räumen und insbesondere bei phosphoreszierenden Stoffen dem Tageslicht ausgesetzt war. Die Leuchtdauer nach Aufnahme der Energie ist mitunter erheblich und beträgt insbesondere im Falle phosphoreszierender Stoffe in Abhängigkeit vom verwendeten Material mehrere Stunden.

In einer besonders vorteilhaften Ausgestaltung wird zur Erzeugung phosphoreszierender Eigenschaften der Einsatz an sich bekannter Leuchtkristalle vorgeschlagen. Das grundsätzliche Problem bei der Handhabung dieser Kristalle ist, daß sie durch Sauerstoff, ultraviolette Strahlen und Wasser abgebaut werden. Deshalb wird vorgeschlagen, die Leuchtkristalle in das Material PVC (Polyvinylchlorid) einzubetten und vor äußeren Einflüssen zu schützen. Die Leuchtkristalle erzielen ohne weiteres Leuchtdauern von 12 und mehr, bis hin zu 20 Stunden.

In einer vorteilhaften Weiterbildung wird vorgeschlagen, auf dem Band zusätzlich an sich bekannte Reflektoren anzubringen, welche die Leuchtkraft bei auftreffendem Scheinwerferlicht wesentlich erhöhen und verstärken können, wie bereits beschrieben in nachteiliger Weise bei Dunkelheit jedoch nicht zu einem Nachleuchten in der Lage sind. Durch die vorgeschlagene Kombination werden die Vorzüge der an sich bereits bekannten mit Reflektoren ausgerüsteten Bänder mit den erfindungsgemäßen verknüpft.

Für den Fall der Herstellung des Bandes aus einem Kuststoff bestehen zur Einbringung der lumineszierenden Stoffe grundsätzlich zwei Möglichkeiten:

So kann zum einen vor der eigentlichen Herstellung des Bandes der Stoff als Zuschlag der Schmelze beigegeben und anschließend das Band, die Faser bzw. Folie in an sich bekannter Weise hergestellt werden. Eine andere Möglichkeit besteht darin, den lumineszierenden Stoff durch Klebemittel auf der Oberfläche des zunächst neutralen Kunststoffbandes anzubringen und zu befestigen.

Zur Verbesserung der Erkennbarkeit werden auf dem Band farbige Muster in allgemein beliebiger Form und Gestaltung aufgebracht und -gedruckt. Hierdurch wird die individuelle Unterscheidung der einzelnen Bänder über unterschiedliche Muster gefördert. Besonders bevorzugt ist die streifenförmige, möglicherweise alternierende Anordnung der reflektierenden und lumineszierenden bzw. phosphoreszierenden Bereiche.

Die Erfindung nimmt für sich in Anspruch die erstmalige Schaffung eines entsprechenden Bandes sowie dessen Einsatz als Armbinde oder Halsband zum Erkennen und Feststellen des Standortes von Mensch oder Tier.

Weiter empfiehlt die Erfindung die Befestigung an Sohlen von insbes. Sportschuhen, um dem Sportler z.B. Jogger auch bei Dunkelheit gut erkennbar zu machen.

Schließlich können derartige Bände in Geweben eingearbeitet und Bekleidungsstücke hieraus hergestellt werden.

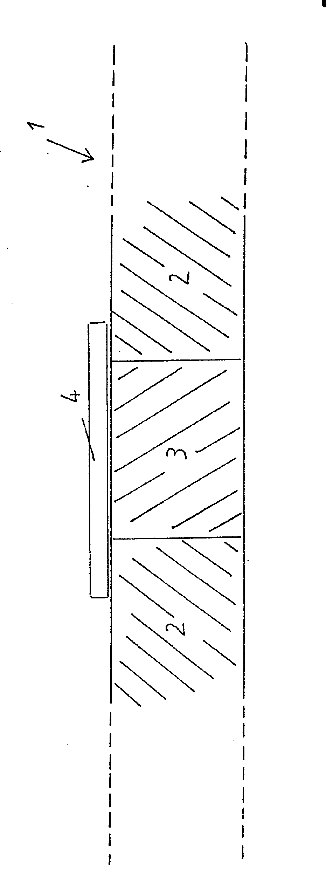

Weitere Einzelheiten und Merkmale lassen sich dem nachfolgenden Beschreibungsteil entnehmen, in dem anhand der Zeichnung ein Ausführungsbeispiel der Erfindung in prinzipienhafter Darstellung wiedergegeben ist. Sie zeigt einen Teil des erfindungsgemäßen Halsbandes in Querschnittsdarstellung.

In seinem grundsätzlichem Aufbau besteht das Halsband 1 aus mehreren Bereichen 2, 3, die mit lumineszierenden Stoffen unterschiedlicher Färbung versehen sind, die nach Aktivierung unterschiedliche Frequenzen aus dem sichtbaren Spektrum abstrahlen. Durch entsprechende Wahl der Form und Berandung der Bereiche 2 und 3 entstehen letztlich willkürlich wählbare Muster. Auf der Außenseite des Bandes 1 ist ein Reflektor 4 aufgebracht, durch den auftreffendes Licht zurückgeworfen und die Sichtbarkeit des Halsbandes weiter verbessert wird. Deren Anzahl und Abstand wird man so wählen, daß in jeder beliebigen Position des Halsbandes 1 wenigstens ein Reflektor auf jeder Seite des Tieres zu liegen kommt, so daß bei seitlicher Anstrahlung wenigstens ein Exemplar optimal erfaßt wird und demzufolge eine Rückstrahlung erfolgt.

Im Ergebnis erhält man ein Band für Tiere, das in der Dunkelheit ohne weiteres die Erkennung und Ortung gestattet.

PATENTANSPRÜCHE
=======================================

1. Band zur Sichtbarmachung bei Dunkelheit,
   d a d u r c h   g e k e n n z e i c h n e t ,
   daß es außenseitig lumineszierende Eigenschaften aufweist.

2. Band nach Anspruch 1, d a d u r c h
   g e k e n n z e i c h n e t , daß es phosphoreszierende Eigenschaften besitzt.

3. Band nach Anspruch 2, g e k e n n -
   z e i c h n e t   d u r c h   in Polyvinylchlorid (PVC) eingebettete Leuchtkristalle.

4. Band nach einem der Ansprüche 1 bis 3,
   g e k e n n z e i c h n e t   d u r c h
   Reflektoren.

5. Band nach einem der Ansprüche 1 bis 4,
   d a d u r c h   g e k e n n z e i c h n e t ,
   daß es aus Kunststoff besteht und mit einer
   Schicht versehen ist.

6. Band nach einem der Ansprüche 1 bis 5,
   g e k e n n z e i c h n e t   d u r c h   in
   Form von Mustern auf das Band aufgebrachte
   Farbe.

7. Band nach einem der Ansprüche 4 bis 6,
   g e k e n n z e i c h n e t   d u r c h

streifenförmige Anordnung der reflektierenden und lumineszierenden bzw. phosphoreszierenden Bereiche.

8. Band nach einem der Ansprüche 1 bis 7,
d a d u r c h   g e k e n n z e i c h n e t,
daß es als Halsband 1 für Tiere, insbesondere Hunde, oder als Armbinde verwendet wird.

9. Band nach einem der Ansprüche 1 bis 7,
d a d u r c h   g e k e n n z e i c h n e t,
daß es an Sohlen von Sportschuhen befestigt
oder als Sohle ausgebildet ist.

10. Band nach einem der Ansprüche 1 bis 7,
d a d u r c h   g e k e n n z e i c h n e t,
daß es in Geweben eingearbeitet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 242 741  (TELINJECT, VETERINÄRMEDIZINISCHE SPEZIALGERÄTE GMBH) <br> * Ansprüche; Seiten 3,4 * | 1,4,5, 7,8,10 | A 01 K  27/00 <br> A 41 D  27/08 |
| Y | | 3 | |
| A | | 2 | |
| | --- | | |
| X | DE-A-2 949 901  (H. PAPE) <br><br> * vollständiges Dokument * | 1,2,4, 6,7 | |
| | --- | | |
| Y | EP-A-0 076 038  (MINNESOTA MINING & MANUFACTURING CO.) <br> * ganzes Dokument * | 3 | |
| | | | **RECHERCHIERTE SACHGEBIETE (Int. Cl.4)** |
| A | | 4,5,8 | A 01 K  27/00 <br> A 41 D  27/00 <br> A 43 B  13/00 |
| | --- | | |
| A | FR-A-2 497 985  (M. HAITAYAN) <br> * Seite 1, Zeilen 7-14 * | 1,9 | |
| | --- | | |
| A | FR-A-2 520 597  (J.J. DRAY) <br> * Seite 1, Zeilen 2-9 * | 1,9 | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 05-06-1987 | WUNDERLICH J E |